# EUROPEAN PATENT SPECIFICATION

(11) **EP 2 359 301 B1**
(45) Date of publication and mention of the grant of the patent: **15.09.2021**
(21) Application number: 09828253.6
(22) Date of filing: 19.11.2009
(51) Int. Cl.: G06F 21/10, H04L 29/06, H04N 21/643, H04N 21/8355, H04N 21/436

(54) **SYSTEM RENEWABILITY MESSAGE TRANSPORT**
ÜBERTRAGUNG VON SYSTEMERNEUERBARKEITSNACHRICHTEN
TRANSPORT DE MESSAGES D'APTITUDE AU RENOUVELLEMENT DU SYSTÈME

(30) Priority: 19.11.2008 US 274106
(43) Date of publication of application: 24.08.2011
(73) Proprietor: Sony Group Corporation, Tokyo 108-0075 (JP); Sony Electronics Inc., Park Ridge, NJ 07656 (US)
(72) Inventor: EYER, Mark Kenneth, Woodinville Washington 98072 (US)
(74) Representative: D Young & Co LLP
(86) International application number: PCT/US2009/065220
(87) International publication number: WO 2010/059878

(56) References cited:
- US-A1- 2004 205 554
- US-A1- 2005 022 227
- US-A1- 2005 159 134
- US-A1- 2006 191 015
- US-A1- 2007 027 817
- US-A1- 2008 148 067
- ADVANCED TELEVISION SYSTEMS COMMITTEE, INC: "A/98, ATSC Standard: System Renewability Message Transport", ATSC, 3 January 2007 (2007-01-03), XP030001598,
- DVB ORGANIZATION: "tm3904r2.ff0020r10.DVB_File_Format_Specif ication.doc", DVB, DIGITAL VIDEO BROADCASTING, C/O EBU - 17A ANCIENNE ROUTE - CH-1218 GRAND SACONNEX, GENEVA - SWITZERLAND, 5 June 2008 (2008-06-05), XP017826784,
- DVB ORGANIZATION: "TM-CPT1368 CPT at GBS87.ppt", DVB, DIGITAL VIDEO BROADCASTING, C/O EBU - 17A ANCIENNE ROUTE - CH-1218 GRAND SACONNEX, GENEVA - SWITZERLAND, 26 February 2007 (2007-02-26), XP017808656,
- DVB ORGANIZATION: "gbs_m92_2 - Report of the 91st Meeting.pdf", DVB, DIGITAL VIDEO BROADCASTING, C/O EBU - 17A ANCIENNE ROUTE - CH-1218 GRAND SACONNEX, GENEVA - SWITZERLAND, 4 October 2007 (2007-10-04), XP017830134,

## Description

### 1. Field of Invention

Embodiments of the present invention are related to transmitting and receiving digital video, audio, and data and, in particular, to transmitting and receiving digital video, audio and data via an IP-type transport stream, or alternatively, in accordance with the MPEG-2 (ISO/IEC 13818-1) Systems standard.

### 2. Background

Content protection technologies are used to establish and manage digital rights, such as the right to make copies, or to distribute content via the Internet. Certain consumer electronic devices are capable of receiving and rendering or otherwise using media content. Many content owners want to be assured that device vendors will manage and protect this content against unauthorized use. Digital rights management (DRM) systems are used to manage the content and may be incorporated in licenses related to the use of protected content.

Security measures required for a device or application are laid out in "Robustness Rules." They dictate the security requirements, including the prevention of widely available and specialized attack tools from accessing restricted content data. For many applications, these requirements mean integrating specialized security techniques focused on the prevention of these attacks. Key hiding, obfuscation, code signing, executable encryption and anti-debug all act as defenses within and around the application, securing the content to the application and ensuring revenue protection for content owners and distributors.

### Prior Art Includes:

US 2007/027817A1, which describes an IC card which includes a data receiving unit which receives a terminal authentication list and a receiving apparatus ID from a memory unit of a receiving apparatus, a first determination unit which obtains a first determination result by determining, with reference to first discrimination information, whether the terminal authentication list is an invalid terminal list or a valid terminal list, a second determination unit which obtains a second determination result by determining whether the receiving apparatus ID is included in the terminal authentication list, and a reply unit which returns to the receiving apparatus a response signal indicative of whether the receiving apparatus is the valid terminal or not, in accordance with contents of the first determination result and the second determination result

ADVANCED TELEVISION SYSTEMS COMMITTEE, INC: "A/98, ATSC Standard: System Renewability Message Transport", ATSC, 3 January 2007, which describes a method for transport of System Renewability Messages. A System Renewability Message (SRM) is a message issued by the administrator of a Content Protection System (CPS) that, when sent to devices that use that CPS, can revoke permission of certain devices or groups of devices to obtain content protected by that CPS.

DVB ORGANIZATION: "tm3904r2.ff0020r10.DVB_File_Format_Specification.doc", DVB, DIGITAL VIDEO BROADCASTING, C/O EBU- 17A ANCIENNE ROUTE- CH-1218 GRAND SACONNEX, GENEVA- SWITZERLAND, 5 June 2008, which describes a File Format used to store and playback DVB services. This prior art also specifies the storage of a range of additional data relevant to the services.

In spite of these robustness rules that licensed products are required to follow, secret device keys may be extracted from certain devices by unauthorized persons, or keys may be stolen from production facilities. A copy protection technology provider often can learn the identities of cloned or stolen units, usually by buying a pirated unit. Units built using stolen or extracted keys usually are not authorized to handle protected content, because typically these units disregard provisions of the applicable DRM restrictions, and would allow (for example) unlimited copying of content, and distribution via the Internet.

Some copy protection technology providers currently include DTCP (Digital Transmission Copy Protection) used for IEEE 1394 links, and HDCP (Highbandwidth Digital Copy Protection) used to protect uncompressed digital video traveling on DVI (digital visual interface) or HDMI (high definition multi-media interface) links.

In order to disable or "revoke" units built from stolen or cloned certificates, system renewability messages, or "SRMs," are distributed along with content that is delivered on terrestrial broadcast, satellite, and cable media. SRMs are also sometimes known as "revocation lists" and may comprise lists containing the identities of illegal units. Each copy protection provider may generate a list of units no longer authorized to handle content according to that particular provider's technology. SRMs therefore may include multiple revocation lists, one list or set for each copy protection technology provider.

What is needed therefore are efficient systems and methods whereby SRMs can be distributed as part of or along with protected content, so that a receiving device can discover the presence of SRMs with the content and process the data appropriately, or as required by terms of a license.

### SUMMARY OF THE ILLUSTRATED EMBODIMENTS

Embodiments of the invention are directed to the transmission of SRMs to set top boxes, or other devices, using a transport protocol such as, for example, an Internet protocol (IP)-type data stream or in a transport stream in accordance with MPEG-2 Systems (ISO/IEC 13818-1). An Extensible Markup Language (XML)-type file is received via an IP-type transport stream. Data, which corresponds to identities of a plurality of devices that are unauthorized for the use of the content, is selected from the XML-type file. The use of content is prevented in accordance with the data.

In one aspect, the data includes a first value that is registered with a central authority and that corresponds to a first attribute definition corresponding to an identity of a provider of copy protection technology. The data further includes a second value corresponding to a second attribute definition indicating the version of the data.

In another aspect, the XML-type file is an XML instance file having a format that is generally consistent with an XML schema. The data is comprised of a first data block and a second data block. The first data block includes data provided by a first provider of copy protection technology, and the second data block includes data provided by a second provider of copy protection technology. The first provider of copy protection technology is different than the second provider of copy protection technology.

In another aspect, the data is comprised of at least one data block. The XML schema includes a first element, a second element and a third element. The first element is for containing the data block, wherein the data block is carried as an instance of a first metadata element. The second element includes at least one instance of the first metadata element, wherein the instance of the first metadata element is defined according to the third element. The third element defines a data structure for the data block.

There are additional aspects to the present inventions. It should therefore be understood that the preceding is merely a brief summary of some embodiments and aspects of the present inventions. The preceding summary therefore is not meant to limit the scope of the inventions. Rather, the scope of the inventions is to be determined by appended claims.

### BRIEF DESCRIPTION OF THE DRAWINGS

These and/or other aspects and advantages of the present invention will become apparent and more readily appreciated from the following description of certain embodiments, taken in conjunction with the accompanying drawings of which:
FIG. 1 is a high level block diagram of an MPEG-2-type transport stream;
FIG. 2 is a high level block diagram of circuitry suitable for generating a transport stream;
FIG. 3 is a high level block diagram of other circuitry suitable for generating a transport stream;
FIG. 4 is a high level block diagram of other circuitry suitable for generating a transport stream;
FIG. 5 is a high level block diagram of a receiving device for use of content;
FIG. 6 is a syntax diagram for a transport stream description table section;
FIG. 7 is a syntax diagram for a conditional access table section;
FIG. 8 is a syntax diagram for a SRM table section;
FIG. 9 is a flow chart of a process for controlling the use of content according to an example of the invention;
FIG. 10 is a an exemplary XML schema according to an example of the invention; and
FIG. 11 is an exemplary XML instance file according to an example of the invention.

### DETAILED DESCRIPTION

Reference will now be made in detail to embodiments of the present invention, examples of which are illustrated in the accompanying drawings, wherein like reference numerals refer to like elements throughout. It is understood that other embodiments may be used and structural and operational changes may be made without departing from the scope of the present invention.

Embodiments of the invention are directed to the transmission of SRMs to set top boxes, or other devices, using an IP-type data stream or alternatively, a transport protocol such as an MPEG-2-type protocol. In accordance with one embodiment, SRM data is incorporated by the content provider or distributor directly into a MPEG-2-type transport packet stream. In particular, a Transport Stream Description Table is used to carry information pertinent to the SRM data which, in turn, is contained within another table. For purposes of discussion herein, embodiments of the present invention may be described in terms of the MPEG-2 Systems standard. However, the present invention may be applicable to other versions of MPEG and to other types of audio/video (A/V) streams.

Source material (or a program), such as movies, sports, news, and music typically includes video, audio, and other associated data. This data is commonly formatted for storage and transmission into a video elementary stream (video ES) and one or more audio elementary streams (audio ES) according to MPEG-2 Systems Standard ISO/IEC 13818-1 (2000). The video ES and the audio ES, in turn, are packetized into a video packetized elementary stream (video PES) and one or more audio packetized elementary streams (audio PES). The video PES, audio PES, and associated data are multiplexed into a Transport Stream (TS), which may be delivered to a receiving device, such as a television set or a set top box, via cable, satellite, Digital Versatile Disc (DVD) player, or terrestrial broadcast.

Each MPEG-2 Transport Stream (TS) may carry several programs, each of which is made up of one or more program elements. Each program element is packetized for delivery into Transport Stream packets. Each Transport Stream packet is a 188-byte structure made up of a four-byte header and a payload of up to 184 bytes. The TS packet header includes a thirteen-bit Packet Identifier (PID), which is a unique integer value associated with each program element. All packets in a particular program element have the same PID value.

The identities of the video and audio elementary streams (ES) are defined by descriptive information called Program Specific Information (PSI) included in the Transport Stream (TS). PSI tables contain information needed by receiving devices to demultiplex and present programs. The PSI includes a Program Association Table (PAT), a Program Map Table (PMT), and optionally, a Conditional Access Table (CAT) and a Transport Stream Description Table (TSDT).

The PAT provides the association between a program number and the Packet Identifier (PID) value of the Transport Stream (TS) packets carrying a Program Map Table for that program. The PMT provides the mappings between program numbers and the program elements that make up the program. The PMT lists the elementary stream (ES) components, the "stream type" of each component (*e*.*g*., audio stream, video stream, data stream, etc.), and the Packet Identifier (PID) value associated with each elementary stream (ES). The CAT is an optional table that is typically used to identify TS packets carrying Entitlement Management Messages (EMMs) used in the management of conditional access to programming. The TSDT is another optional table that is used to store information that is relevant to all programs within the TS multiplex.

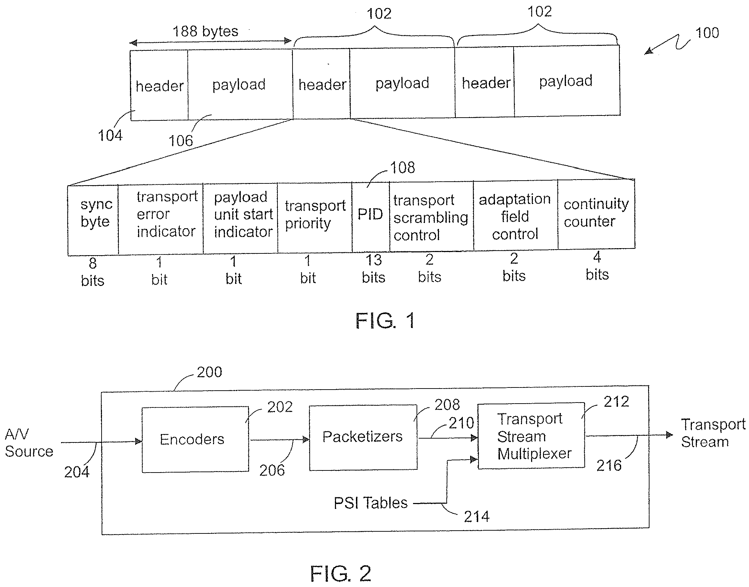

FIG. 1 is a diagram of the MPEG-2 Transport Stream (TS) 100, which includes a series of 188-byte transport packets 102, each of which includes a 4-byte header 104 and a 184-byte payload 106. Each header 104 includes, among other things, a 13-bit Packet Identifier (PID) 108 that is used to label the packets in the multiplex and associate them with particular Elementary Streams (ES) or PSI data in the multiplex. As previously described, the Transport Stream (TS) 100 also includes Program Specific Information (PSI), such as Program Association Table (PAT) data, Program Map Table (PMT) data, Conditional Access Table (CAT) data, and Transport Stream Description Table (TSDT) data, as part of the payload of certain packets which are multiplexed with the packetized elementary streams (PES).

A receiving device receives the Transport Stream (TS), delivers the video portion of the program to a video subsystem such as a display (e.g., television screen), and delivers the audio portion to an audio subsystem such as a decoder/amplifier, a powered loudspeaker, or headphones.

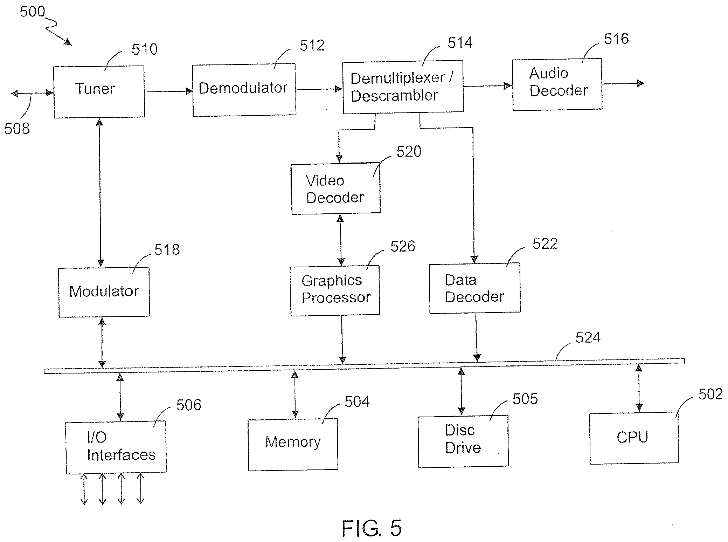

An exemplary receiving device is shown in FIG. 5 as a set top box 500. The set top box 500 includes a central processing unit (CPU) 502 and memory 504 (such as Random Access Memory (RAM), Read Only Memory (ROM), or flash memory), and a disc drive 505, such as a hard disc drive, floppy disc drive, optical disc drive or may accommodate other mass storage or electronic storage media. Such memory and storage media are suitable for storing data as well as program instructions for processes to be executed by the CPU 502. Information and programs stored on the electronic storage media or memory may also be transported over any suitable transmission medium.

The set top box 500 includes circuitry suitable for audio decoding and processing, the decoding of video data compressed in accordance with a compression standard such as the Motion Pictures Experts Group (MPEG) standard and other processing. It is noted that these components may be incorporated into a television (not shown), thus eliminating the set top box 500. In addition, a computer may substitute for the television or the set top box 500 or both. The computer may include a variety of devices capable of generating video media including a tuner card coupled to a digital network, cable television network, or DSS (digital satellite system) network.

The set top box 500 may be coupled to additional devices such as a personal computer, video cassette recorder, camcorder, digital camera, personal digital assistant and other audio/visual or Internet related devices (not shown). In addition, a data transport architecture, such as that known as the Home Audio-Video Interoperability (HAVi) architecture may be used to enable interoperability among devices on a network regardless of the device manufacturer. This architecture may be used to create a home network system between electronic devices and Internet appliances. The set top box 500 may run an operating system suitable for a home network system.

The set top box 500 includes input/output interfaces 506 that may be used with any device suitable for controlling the set top box 500, such as a remote control, an infrared receiver, a wireless radio frequency receiver, a wired connection interface, a personal digital assistant, a laptop computer, a keyboard, or a computer mouse. In addition, an input device in the form of a control panel (not shown) located on the television or the set top box 500 can be provided.

The set top box 500 may also be coupled to an Internet service provider (ISP) host by a suitable connection including dial-up connections, DSL (Digital Subscriber Line) or a transmission medium 508 (e.g. using a cable modem) connected to a tuner 510 to provide access to services and content from the ISP and the Internet. The set top box 500 may also be used as an Internet access device to obtain information and content from remote servers via the Internet. In certain satellite set top box environments, the data can be downloaded at very high speed from a satellite link, with asymmetrical upload speed from the set-top box provided via a dial-up or DSL connection.

Still referring to FIG. 5, the set top box 500 further includes a demodulator 512, a demultiplexer/descrambler 514, an audio decoder 516, a modulator 518, a video decoder 520, a data decoder 522, a system bus 524, and a graphics processor 526. The transmission medium 508, such as a coaxial cable or off-air broadcast antenna, is coupled by a suitable interface to the tuner 510. The tuner 510 may include a broadcast in-band tuner for receiving content, and for cable, an out-of-band (OOB) tuner for receiving data transmissions and a return path tuner for providing an OOB return path for outbound data. A separate tuner (not shown) may be provided to receive conventional RF broadcast television channels.

The demodulator 512 may demodulate any modulated information from the tuner 510 such as MPEG-2 formatted data. The demultiplexer/descrambler circuit 514 separates the demodulated information into discrete streams of audio, video, and related data. The programming is divided into packets, each packet bearing a Packet ID (PID) value that identifies the packet as containing a particular type of data (e.g. audio, video, and data). The demultiplexer / descrambler circuit 514 also decrypts encrypted information in accordance with a decryption algorithm to prevent unauthorized access to programming content, for example.

Audio packets from the demultiplexer / descrambler circuit 514 (those identified with an audio PID) are decrypted and forwarded to the audio decoder 516. The audio decoder 516 may convert the audio packets to analog audio to drive a speaker system (*e*.*g*. stereo or home theater multiple channel audio systems) or other audio system (e.g. stereo or home theater multiple channel amplifier and speaker systems) or may simply provide decoded audio output. Video packets from the demultiplexer / descrambler circuit 514 (those identified with a video PID) are decrypted and forwarded to the video decoder 520. Similarly, data packets from the demultiplexer / descrambler circuit 514 (those identified with a data PID) are decrypted and forwarded to the data decoder 522.

The data decoder 522 processes and transmits data packets to the CPU 502 via the system bus 524. The video decoder 520 passes video data to the graphics processor 526. The graphics processor is computer-optimized to rapidly process graphics information. The graphics processor 526 is also coupled to the system bus 524 and operates under the control of the CPU 502.

Upon purchase of the set top box 500, a service provider may include a URL or IP address for the web-based access portal of the service provider. The set top box 500 may operate in a bi-directional communication mode. Accordingly, data and other information may be transmitted in both directions between the service provider and the set top box 500 using an out-of-band channel. In one example, the data passes through the system bus 524, the modulator 518, and the tuner 510 (operating as a return path OOB tuner) to the transmission medium 508. This enables the set top box user to send information to the service provider, *e.g.,* service requests, software updates, or changes and registration information. In another example, the set top box 500 can process data that is received via an XML-type file or document according to an XML schema.

The set-top box 500 may include any of a plurality of I/O (Input/Output) signals at the I/O interfaces 506 for interconnection with other devices. By way of example, and not limitation, a serial RS-232 signal may be provided at one port to enable interconnection to any suitable serial device supported by the set top box's internal software. Similarly, communication with appropriately compatible devices can be provided with the I/O interfaces via an Ethernet port, a USB (Universal Serial Bus) port, an IEEE 1394 (Firewire or I-Link) port, S-video port, or infrared port. These interfaces may be used to interconnect the set top box 500 with any of a variety of devices such as storage devices, audio/visual devices, gaming devices and Internet appliances. (not shown)

I/O interfaces 506 can further include a modem port to facilitate high speed or alternative access to the Internet or other data communication functions. In one example, the modem port includes a DOCSIS (Data Over Cable System Interface Specification) cable modem. This modem facilitates high speed network access over a cable system when the port is appropriately coupled to a transmission medium embodied as a coaxial cable. A PS/2 or other keyboard/mouse/joystick coupled to a port may be used to enable data entry into the set top box 500. The set top box 500 also may include a basic video output port for direct connection to a television set. In one embodiment, a video output port can provide composite video formatted as National Television System Committee (NTSC) video. In some examples, the video output port may be coupled directly to the graphics processor 526 or the demultiplexer/descrambler 514 rather than passing through the system bus 524 as illustrated in FIG. 5.

The input/output interfaces 506 may include the infrared port that may be embodied as an infrared receiver and may receive commands from an infrared remote control, infrared keyboard or other infrared control device. Although not shown, front panel controls may be used in some embodiments to directly control the operation of the set top box 500 through a front panel control interface coupled to the I/O interfaces 506. Selected interfaces such as those described above and others can be provided in the set top box 500 in various combinations as required or desired.

The set top box 500 also includes the disc drive 505 for storage of content and data as well as providing storage of programs (software code) for operating the CPU 502. The set top box 500 may also include other storage mediums such as a floppy disc drive, CD ROM drive, CD R/W drive, DVD drive, and others. The CPU 502 is coupled through the system bus 524 to the memory 504. The memory 504 may include any suitable memory technology including Random Access Memory (RAM), Read Only Memory (ROM), Flash memory, Electrically Erasable Programmable Read Only Memory (EEPROM), and others.

As previously mentioned, embodiments of the invention transmit SRMs to set top boxes, or other devices, using a protocol such as an MPEG-2 Systems -type protocol. In accordance with one embodiment, SRM data is incorporated by the content provider or distributor directly into an MPEG-2 Transport Stream. In particular, a Transport Stream Description Table is used to carry information pertinent to the SRM data. In this case, a descriptor is carried in the Transport Stream Description Table that identifies a PID value corresponding to TS packets carrying SRM data in the multiplex. The descriptor, which is an MPEG-2-type Registration Descriptor, carries an identifier ("format_identifier") with a value that is registered as identifying SRM data. The descriptor also includes a PID value, acting as a pointer to TS packets carrying SRM data.

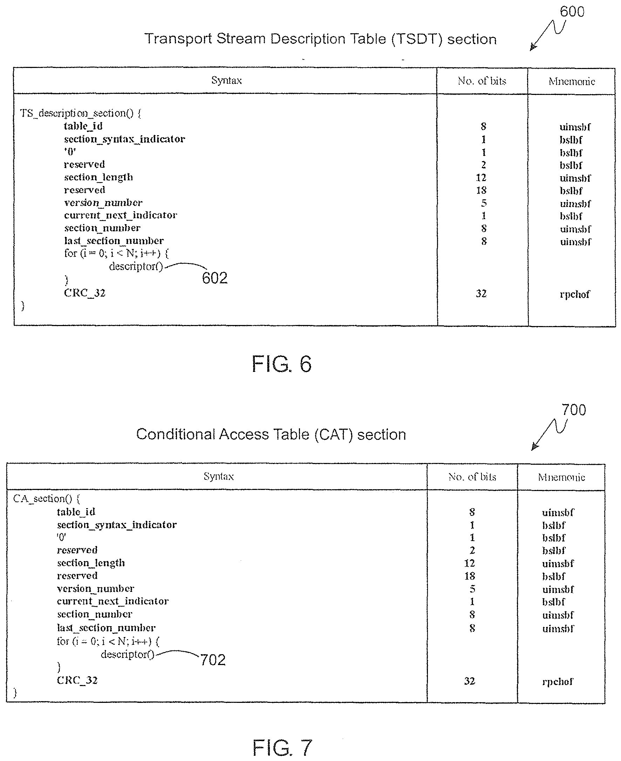

FIG. 6 shows the syntax for a TSDT section 600. A descriptor field 602 is used for data corresponding to the Registration Descriptor which, in turn, includes an identifier ("format_identifier") (not shown) with a value that is registered as identifying SRM data. This Registration Descriptor data also includes a PID value (not shown) that points to TS packets carrying the SRM data.

In an alternative example of the invention, an MPEG-2 Conditional Access Table (CAT) is used to carry information pertinent to the SRM data. The CAT includes an MPEG-2 Conditional Access descriptor, "CA_descriptor()," with a registered value of "CA_system_id" that is known to correspond to SRM data. The descriptor also carries a PID value pointing to TS packets carrying SRM data.

FIG. 7 shows the syntax for a CAT section 700. A descriptor field 702 is used for data corresponding to the Conditional Access descriptor, "CA_descriptor()," which in turn, includes an identifier ("CA_system_id") (not shown) with a value that is registered as identifying SRM data. This Conditional Access descriptor data also includes a PID value (not shown) that points to TS packets carrying the SRM data.

Using either example of FIG. 6 or FIG. 7, the TS packets identified in the TDST or CAT contain data that form another table that is used to carry the SRM data itself. This other table is a MPEG-2-type private table incorporating a MPEG-2-type long form table section syntax. For transmission purposes such a table can be divided into sections to facilitate the transmission of a relatively large quantity of data. Using this table, the field in the table_id_extension position (which is renamed "CP_provider_id") identifies a copy protection technology provider. This field is registered with the Advanced Television Systems Committee (ATSC) code point registrar or other central authority.

Each SRM table instance (which is identified by a unique value of CP_provider_id) can be split into up to 256 table sections of 4096 bytes each. Thus the largest SRM table can be up to about 1 MB in length. If any copy protection technology needs more than 1MB for an SRM, the copy protection technology provider can register multiple values for the CP_provider_id field. The 32-bit cyclical redundancy check (CRC) provided for each table section offers a measure of error detection capability. The payload (body) portion of the table structure is not defined by a standard, and therefore is defined by the particular copy protection provider.

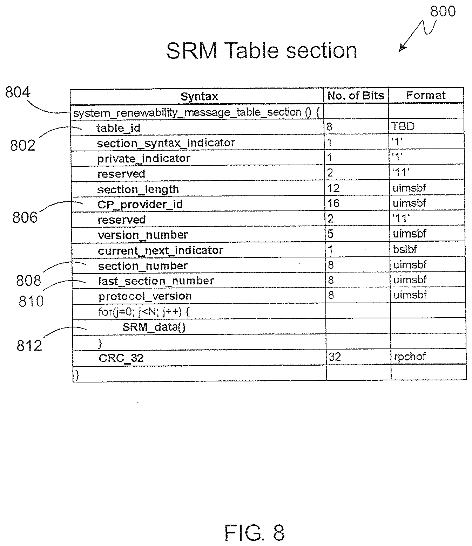

FIG. 8 shows a bit stream syntax for a SRM table section 800 using the MPEG-2 "long form" table section syntax. The "table_id" field 802 contains an 8-bit, unsigned integer number that indicates the type of table section being defined. For the "system_renewability_message _table_section()" 804, the tabie_id is established by standards committees or other authorities. The "CP_provider_id" field 806 is a 16-bit field that identifies the copy protection technology provider associated with this table section. Values of CP_provider_id are assigned by the ATSC Code Point Registrar or other central authority. The "section_number" field 808 is an 8-bit field that gives the number of this table section. The "last_section_number" field 810 is an 8-bit field that specifies the number of the last table section. The "SRM_data()" field 812 is data with a format that is defined by the copy protection technology provider identified in the "CP_jprovider_id" field 806. This "SRM_data()" field 812 is the "payload" portion of the SRM table and contains the actual SRM list data.

In an alternative embodiment of the invention, all SRMs are transported in TS packets corresponding to one or more, well-known PID values that are established by industry convention for exclusive use by SRMs. Thus receiving devices can skip the step of using the TSDT or CAT to find the SRM PID or PIDs. However, even if there is agreement within an industry to use a fixed, well-known PID value, a pointer to this PID in either a CA_descriptor() in the CAT, or an MPEG-2 Registration Descriptor in the TSDT can still be used.

Thus it can be seen that examples of the invention allow the presence of SRMs within a MPEG-2-type TS to be signaled by the use of a descriptor within a Transport Stream Descriptor Table or a Conditional Access Table. This descriptor identifies one or more PID values corresponding to TS packets carrying SRM data. The descriptor may be an MPEG-2-type Registration Descriptor carrying a format_id value registered with a SMPTE-type registration authority to identify SRMs, or it may use other means to unambiguously establish a pointer to TS packets carrying SRM data. Alternatively, another MPEG-standard descriptor may be used to establish the presence of SRM data and point to a PID value. The MPEG CA_descriptor() is one such example.

Each SRM is formatted as an MPEG-2-type long-form private table section wherein each copy protection provider uses a unique value for the "CP_provider_id" field which is in the position of the "table_id_extension" field. A registration authority, such as an ATSC-type code point registrar, manages assignments of this field. The use of such unique values in the "CP_provider_id" field allows multiple SRM instances (corresponding to revocation lists associated with multiple copy protection technology providers) to be transported within TS packets of a given PID value. This allows a receiving device to forward all SRMs in the TS without the need to recognize and identify individual copy protection technology providers.

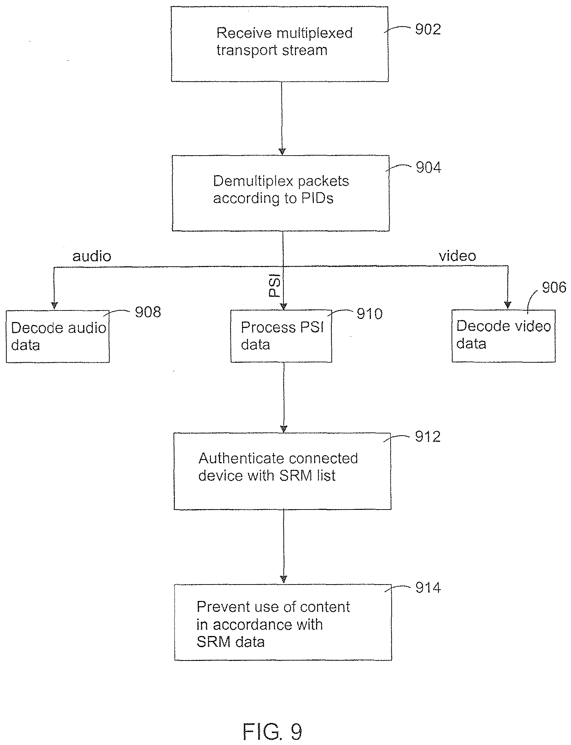

FIG. 9 is a flow chart of a process for controlling the use of content. A multiplexed transport stream is received by a receiving device from a content provider. (Step 902) The data packets are demultiplexed according to their PID values. (Step 904) Thus video data packets are directed to a video decoder for further processing. (Step 906) Similarly, audio data packets are directed to an audio decoder for further processing. (Step 908) Data packets having program specific information (PSI) data are sent to a data decoder which processes this data and forwards the data to a processor. (Step 910) SRM data that is included in the PSI data is compared with the identity of another device connected to the receiving device output that is a potential recipient of the protected content, thus authenticating this other device. (Step 912) If this other device has an identity that corresponds to an identity contained within the SRM data, then delivery of the content to that device is prevented. (Step 914)

FIG. 2 is a high-level block diagram of circuitry 200 suitable for generating a Transport Stream. The circuitry 200 includes one or more encoders 202, which receive audio/video (A/V) source material 204 and encode the source material 204 according to MPEG-2 audio/video compression standards. The encoders 202 may be circuitry that encodes audio, data, and video according to MPEG-2 standards and outputs the coded video, coded audio, or other coded bit streams as at least one elementary stream (ES) 206. The source material 204 may be a movie, a television program, a music video, a computer game, or other source material suitable for MPEG-2 encoding.

The elementary stream (ES) 206 is delivered to one or more packetizers 208 (typically an audio packetizer and a video packetizer), which packetizes the elementary stream (ES) 206 into a packetized elementary stream (PES) 210. The packetized elementary stream (PES) 210 is delivered to a Transport Stream (TS) multiplexer 212, which multiplexes individual packetized elementary streams (PES) 210 with each other and with any Program Specific Information (PSI) tables 214 [*e*.*g*., the Program Association Table (PAT), the Program Map Table (PMT), the Conditional Access Table (CAT), and the Transport Stream Description Table (TSDT)] to produce the Transport Stream (TS) 216.

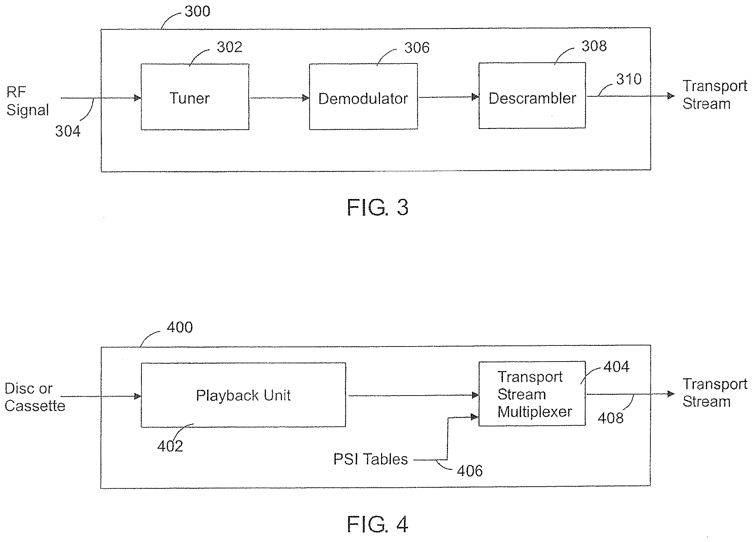

FIG. 3 is a high-level block diagram of circuitry 300 suitable for generating a Transport Stream. The circuitry 300 includes a tuner 302, which receives programming (*e.g.,* movies, sports, news, and music) carried on a radio frequency (RF) signal 304 from a satellite dish, a cable, a terrestrial broadcast antenna, or any other RF signal source. The tuner 302 cleans the incoming RF signal 304 as needed to enable a demodulator 306 to recover the programming from the RF signal 304. A descrambler 308 descrambles the programming, if it has been scrambled prior to transmission, to produce the Transport Stream 310.

FIG. 4 is a high-level block diagram of circuitry 400 suitable for generating a Transport Stream. The circuitry 400 includes a playback unit 402, which receives programming (*e.g.,* movies, sports, news, and music) from a video disc or a video cassette recorded according to MPEG-2 standards. The playback unit 402 is known circuitry (e.g., magnetic reader circuitry, optical reader circuitry) capable of delivering audio and video to a Transport Stream multiplexer 404. The Transport Stream (TS) multiplexer 404 multiplexes the output of the playback unit 402 with Program Specific Information (PSI) tables 406 [*e.g.,* the Program Association Tables (PAT), the Program Map Table (PMT), and optionally the Conditional Access Table (CAT) and the Transport Stream Description Table (TSDT)] to produce the Transport Stream (TS) 408.

As previously discussed, SRM messages can be supplied in a broadcast received from a content provider, such as for example a cable company. In one example the broadcast is a stream of data in an MPEG 2-like format. However in an alternative example, an Internet protocol (IP) type data stream carries both the content as well as the SRM data. For example, an IP television (IPTV) service uses an IP data stream to provide content to a television set. For pay content services, the content provider's server sends decryption keys to a client device (*e.g.,* a customer's set top box) for use by a decoder in unscrambling the content that is sent via a multicast (or in some instances, a unicast) address scheme.

The client device can get the keys to descramble the multicast packets and render the audio/video content from this. In one embodiment of the invention, SRM data also is delivered to client devices via a multicast or unicast IP transmission. An Extensible Markup Language (XML)-type file or document that carries the SRM data is delivered to the client device. Thus an XML-type file is received via an IP-type transport stream. The XML-type file can be either compressed or uncompressed. Data is selected from the XML-type file. This is data that corresponds to identities of devices that are not authorized for the use or rendering of certain content. Accordingly, the use of these devices is prevented in accordance with this data.

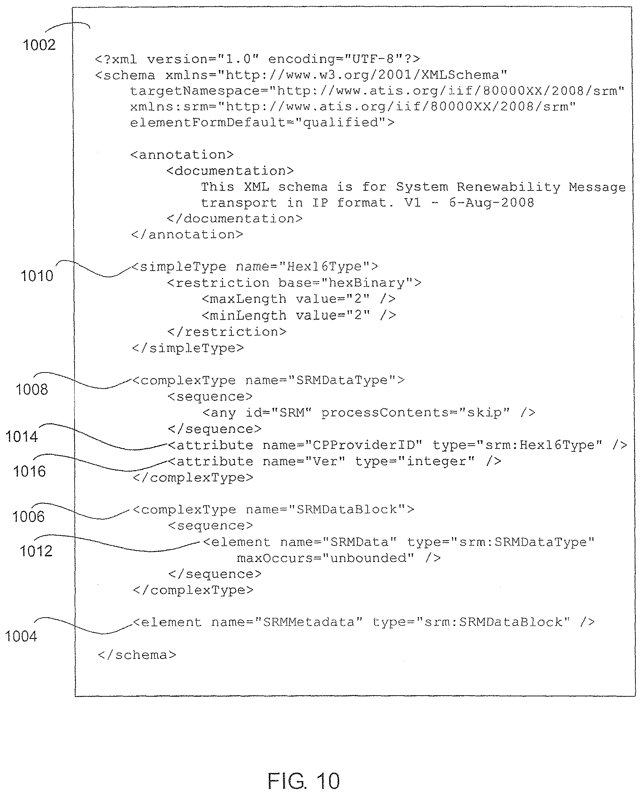

An alternative embodiment employs the use of an XML schema and an XML instance file that is delivered to a client device via an IP data transmission. The XML instance file includes at least one data block, wherein the data block in turn includes data corresponding to the identities of devices that are not authorized to use or render the content. FIG. 10 depicts an exemplary XML schema 1002 in accordance with one embodiment of the invention. This schema 1002 includes a first element 1004 designated in FIG. 10 as "SRMMetadata", a second element 1006 designated "SRMDataBlock," a third element 1008 designated "SRMDataType," and a fourth element 1010 designated "Hex16Type." The second, third and fourth elements 1006, 1008, 1010 are type attributes of the first element 1004.

The first element 1004 is a root element for containing one or more data blocks to be carried in an XML instance file. Each of the data blocks is carried as an instance of a first metadata element 1012, designated in FIG. 10 as "SRMData." The second element 1006 includes at least one instance of the first metadata element 1012 as indicated by the <sequence> tags. Each of the instances of the first metadata element 1012 is defined according to the third element 1008. The third element 1008 in turn defines a data structure for the format, representation and carriage of the data blocks in one or more XML instance files. One XML instance file can carry one or more data blocks, each of which can include data provided by a different copy protection technology provider.

The third element 1008 has a first attribute definition 1014, designated in FIG. 10 as "CPProviderID." This defines a value to be included in an XML instance file and corresponds to an identity of a copy protection technology provider. The fourth element 1010 is a type attribute that requires the first attribute value to be in hexadecimal numerical base form, *i.e.* base 16. This is a useful base in that every byte of data can be represented as two hexadecimal characters or digits.

The third element 1008 further has a second attribute definition 1016, designated "Ver," defining a value to be included in an XML instance file and corresponding to a version number of each data block. This second attribute value can be incremented when a change occurs in the information carried within the instance of the first metatdata element 1012. Thus if a client device already has processed a block of SRM data having a given version number, the device can skip processing that data again. Rather, it can wait for a data block from that same copy protection technology provider but identified with a different value associated with the second attribute definition 1016.

As denoted by the "<any>" tag within the third element 1008, the copy protection technology provider can extend the XML schema 1002 with SRM data in the form of child elements which can be in a format, quantity and designation chosen by the copy protection technology provider.

As directed by the "<sequence>" tags in the second element 1006, multiple instances of data blocks may appear within the SRMMetadata element of an XML instance file. Each instance must include the first attribute definition 1014 ("CPProviderID") and the second attribute definition 1016 ("Ver"). Thus a single XML instance file can include SRM data from one or more copy protection technology providers. The format of the SRM data itself is unconstrained. Each copy protection technology provider is free to format the data in any desired way. Client devices use the first attribute value ("CPProviderID") to determine the expected format of a particular block of SRM data.

As previously discussed, each copy protection technology provider has an identification value associated with the first attribute definition 1014. Accordingly in one embodiment, the copy protection provider uses a central registration system for receiving an assigned identification number. The central authority can be the Digital Video Broadcasting (DVB) Project organization, or the Society of Motion Picture and Television Engineers Registration Authority (SMPTE-RA), or other central authority. The value for the first attribute definition 1014 is unique and within the same number assignment space as the "CA_system_id" values which are assigned in European Telecommunications Standard Institute (ESTI) Technical Report 162 (*i*.*e*., ETR 162), Section 4.3, Table 3. The copy protection provider can go to the DVB organization and obtain a unique 16-bit value thus insuring that no other provider has the same value.

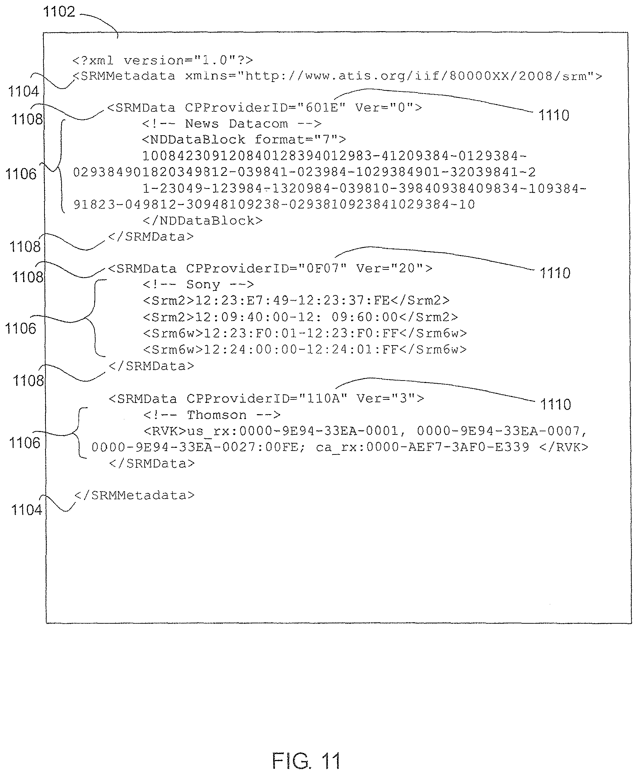

FIG. 11 shows an exemplary XML instance file 1102 that is formatted generally in accordance with the XML schema 1002 of FIG. 10. The XML instance file 1102 includes a root element 1104 designated in FIG. 11 as "SRMMetadata." The SRM data itself is inserted as a plurality of data blocks 1106 between a plurality of start and end "<SRMData>" tag pairs 1108. In the illustrated example, this XML instance file 1102 includes data blocks of SRM data from three different copy protection providers, each of which is uniquely identified by a hexadecimal value 1110.

Thus it can be appreciated that the XML schema 1002 of FIG. 10 provides a first element 1004 ("SRMMetadata") for containing data blocks 1106 to be carried in the XML instance file 1102 (FIG. 11). Each of these data blocks 1106 comprises the SRM data itself and is formatted according to the third element 1008 ("SRMDataType") requirements. Each of these data blocks further is associated with a copy protection provider identification value and a version number.

While the embodiment of FIGs. 11 and 10 illustrate an XML file or document and its associated XML schema, other embodiments can include other schema languages or variations, such as for example, Document Type Definition (DTD), XML Schema (W3C), REgular LAnguage for XML Next Generation (RELAX NG), and XML Document Object Model (XML DOM).

Embodiments of the invention can be implemented using hardware, software, or a combination of hardware and software. Such implementations include state machines and application specific integrated circuits (ASICs). In implementations using software, the software may be stored on a computer program product (such as an optical disk, a magnetic disk, a floppy disk, etc.) or a program storage device (such as an optical disk drive, a magnetic disk drive, a floppy disk drive, etc.).

The architectures of FIGs. 2 - 5 are not exclusive. Other architectures may be derived in accordance with the principles of the invention to accomplish the same objectives. Further, the function of the elements of the decoder 522 of FIG. 5 and the process steps of FIG. 9 may be implemented in whole or in part within the programmed instructions of a microprocessor. In addition, the principles of the invention apply to any form of MPEG or non-MPEG compatible content. A data stream formed according to the invention principles may be used in a variety of applications, including video server or PC type communications via telephone lines, for example. A program data stream with one or more components of video, audio and data formed to incorporate program specific information according to invention principles may be recorded on a storage medium and transmitted or re-broadcast to other servers, PCs or receivers.

## Claims

1. A method comprising:
receiving (902), at a device (500), content and an XML-type file via an IP-type transport stream, wherein the XML-type file is an XML instance file (1102) having a format that is consistent with an XML schema (1002);
selecting data from the XML-type file; and
preventing delivery (914) of the content from the device to another device connected
to the device in accordance with the data,
wherein the data comprises;
a system renewability message comprising a list of identities of one or more
devices that are unauthorized for the use of the content, and
the data is comprised of a first data block and a second data block, wherein the first data block includes data provided by, and formatted according to, a first provider of copy protection technology identified by a first unique value in the first data block, wherein the second data block includes data provided by, and formatted according to, a second provider of copy protection technology identified by a second unique value in the second data block, and wherein the first provider of copy protection technology is different than the second provider of copy protection technology.

2. The method of claim 1 wherein the XML-type file is a compressed file.

3. The method of claim 1 wherein the first value is registered with a central authority.

4. The method of claim 3 wherein the central authority comprises one of a Digital Video Broadcasting Project-type organization and a Society of Motion Picture and Television Engineers Registration Authority-type organization.

5. The method of claim 1 wherein the data further includes a second value corresponding to a second attribute definition and to a version of the data.

6. A computer program comprising computer readable code adapted to cause a device computer to perform a method according to any one of claims 1 to 5.

7. A device having a processing unit capable of executing software routines, and a computer program comprising computer program code means adapted to perform all of the steps of any of claims 1 to 6 when said program is executed by the processing unit.

## Patentansprüche

1. Verfahren, das Folgendes umfasst:
Empfangen (902), an einer Vorrichtung (500), eines Inhalts und einer Datei vom XML-Typ über einen Transportstrom vom UP-Typ, wobei es sich bei der Datei vom XML-Typ um eine XML-Instanzdatei (1102) mit einem mit einem XML-Schema (1002) konsistenten Format handelt;
Auswählen von Daten aus der Datei vom XML-Typ; und
Verhindern einer Lieferung (914) des Inhalts von der Vorrichtung an eine mit der Vorrichtung verbundene andere Vorrichtung gemäß den Daten,
wobei die Daten Folgendes umfassen:
eine Systemerneuerbarkeitsnachricht, die eine Liste von Identitäten einer oder mehrerer Vorrichtungen, die nicht zur Verwendung des Inhalts autorisiert sind, umfasst, und wobei die Daten aus einem ersten Datenblock und einem zweiten Datenblock bestehen, wobei der erste Datenblock Daten beinhaltet, die durch einen ersten Anbieter einer Kopierschutztechnologie, identifiziert durch einen ersten eindeutigen Wert in dem ersten Datenblock, bereitgestellt und gemäß diesem formatiert werden, wobei der zweite Datenblock Daten beinhaltet, die durch einen zweiten Anbieter einer Kopierschutztechnologie, identifiziert durch einen zweiten eindeutigen Wert in dem zweiten Datenblock, bereitgestellt und gemäß diesem formatiert werden, und wobei sich der erste Anbieter einer Kopierschutztechnologie von dem zweiten Anbieter einer Kopierschutztechnologie unterscheidet.

2. Verfahren nach Anspruch 1, wobei es sich bei der Datei vom XML-Typ um eine komprimierte Datei handelt.

3. Verfahren nach Anspruch 1, wobei der erste Wert bei einer zentralen Stelle registriert ist.

4. Verfahren nach Anspruch 3, wobei die zentrale Stelle eine Digital-Video-Broadcasting-Project-Organisation und/oder eine Society-of-Motion-Pictureand-Television-Engineers-Registration-Authority-Organisation umfasst.

5. Verfahren nach Anspruch 1, wobei die Daten ferner einen zweiten Wert beinhalten, der einer zweiten Attributdefinition und einer Version der Daten entspricht.

6. Computerprogramm, das computerlesbaren Code umfasst, eingerichtet zum Bewirken, dass ein Vorrichtungscomputer ein Verfahren nach einem der Ansprüche 1 bis 5 durchführt.

7. Vorrichtung mit einer Verarbeitungseinheit, die in der Lage ist, Softwareroutinen auszuführen, und einem Computerprogramm, das Computerprogrammcodemittel umfasst, eingerichtet zum Durchführen sämtlicher Schritte nach einem der Ansprüche 1 bis 6, wenn das Programm durch die Verarbeitungseinheit ausgeführt wird.

## Revendications

1. Procédé comprenant :
la réception (902), au niveau d'un dispositif (500), d'un contenu et d'un fichier de type XML par l'intermédiaire d'un flux de transport de type IP, le fichier de type XML étant un fichier d'instance XML (1102) ayant un format qui est cohérent avec un schéma XML (1002) ;
la sélection de données à partir du fichier de type XML ; et
l'empêchement de la livraison (914) du contenu en provenance du dispositif à un autre dispositif connecté au dispositif conformément aux données,
les données comprenant :
un message d'aptitude au renouvellement du système comprenant une liste d'identités d'un ou plusieurs dispositifs qui ne sont pas autorisés à utiliser le contenu, et les données étant composées d'un premier bloc de données et d'un second bloc de données, le premier bloc de données comprenant des données fournies par, et formatées selon, un premier fournisseur de technologie de protection contre la copie identifié par une première valeur unique dans le premier bloc de données, le second bloc de données comprenant des données fournies par, et formatées selon, un second fournisseur de technologie de protection contre la copie identifié par une seconde valeur unique dans le second bloc de données, et le premier fournisseur de technologie de protection contre la copie étant différent du second fournisseur de technologie de protection contre la copie.

2. Procédé selon la revendication 1, le fichier de type XML étant un fichier compressé.

3. Procédé selon la revendication 1, la première valeur étant enregistrée auprès d'une autorité centrale.

4. Procédé selon la revendication 3, l'autorité centrale comprenant l'une d'une organisation de type projet DVB, "Digital Video Broadcasting", et d'une organisation de type autorité d'enregistrement SMPTE, "Society of Motion Picture and Television Engineers".

5. Procédé selon la revendication 1, les données comprenant en outre une seconde valeur correspondant à une seconde définition d'attribut et à une version des données.

6. Programme informatique comprenant un code lisible par ordinateur adapté pour amener un ordinateur de dispositif à réaliser un procédé selon l'une quelconque des revendications 1 à 5.

7. Dispositif ayant une unité de traitement capable d'exécuter des routines logicielles, et un programme informatique comprenant des moyens de code de programme informatique adaptés pour réaliser toutes les étapes selon l'une quelconque des revendications 1 à 6 lorsque ledit programme est exécuté par l'unité de traitement.
